# EUROPÄISCHE PATENTSCHRIFT

(11) **EP 2 571 764 B1**
(45) Veröffentlichungstag und Bekanntmachung des Hinweises auf die Patenterteilung: **12.04.2017**
(21) Anmeldenummer: 11724574.6
(22) Anmeldetag: 19.05.2011
(51) Int. Cl.: B64D 27/24, B64D 27/14, B64D 27/04

(54) **HYBRIDANTRIEB FÜR HUBSCHRAUBER**
HYBRID DRIVE FOR HELICOPTERS
MOTORISATION HYBRIDE POUR HÉLICOPTÈRE

(30) Priorität: 19.05.2010 DE 102010021025
(43) Veröffentlichungstag der Anmeldung: 27.03.2013
(73) Patentinhaber: Airbus Defence and Space GmbH, 85521 Ottobrunn (DE); AIRBUS HELICOPTERS DEUTSCHLAND GmbH, 86609 Donauwörth (DE)
(72) Erfinder: BOTTI, Jean, 80538 München (DE); STUHLBERGER, Johannes, 81369 München (DE); JÄNKER, Peter, 85521 Ottobrunn (DE); KLÖPPEL, Valentin, 81827 München (DE); NIESL, Georg, 81243 München (DE)
(74) Vertreter: Lorenz & Kopf PartG mbB Patentanwälte, LKGLOBAL
(86) Internationale Anmeldenummer: PCT/EP2011/058123
(87) Internationale Veröffentlichungsnummer: WO 2011/144690

(56) Entgegenhaltungen:
- WO-A2-03/106259
- US-A- 4 554 989
- US-A- 4 605 185
- US-A1- 2005 045 762
- US-A1- 2009 145 998

## Beschreibung

### GEBIET DER ERFINDUNG

Die Erfindung betrifft Hubschrauber mit einem Hybridantrieb.

### HINTERGRUND DER ERFINDUNG

Heutige Hubschrauber weisen oft eine geringe Effizienz des Antriebssystems auf. Zudem ist der Antrieb oft sehr laut.

Der Antriebsstrang besteht aus einer oder mehreren Verbrennungsmaschinen und einem mechanischen Hauptgetriebe. Oft werden Turbinenwellenantriebe oder Hubkolbenmotoren eingesetzt.

Ein Helikopter mit einer Taumelscheibenbetätigungsvorrichtung ist in der DE 10 2008 028 866 A1 sowie in der WO 2009/153236 A2 beschrieben.

Aus der US 2009/0145998 A1 ist ein Hubschrauber mit einem Hybridantrieb bekannt, der einen Gasturbinenmotor aufweist, der einen Generator antreibt, der elektrische Energie zur Versorgung einer elektrischen Maschine erzeugt, die einen Rotor des Hubschraubers antreibt. Weiterhin ist ein Batteriesatz zum Speichern elektrischer Energie vorgesehen. Während eines ersten Abschnitts einer Flugenveloppe des Hubschraubers stellt der Gasturbinenmotor zumindest einen Hauptanteil der Antriebskraft zur Verfügung, und kann der Generator den Batteriesatz laden, wogegen während eines zweiten Abschnitts der Flugenveloppe der Batteriesatz zumindest einen Hauptanteil der Antriebskraft zur Verfügung stellt, und der Gasturbinenmotor im wesentlichen außer Betrieb sein kann. Der Hubschrauber weist eine Kabine auf, und es können beispielsweise zwei Gasturbinenmotoren vorhanden sein, die innerhalb der Kabine angeordnet sind.

Aus der US 4 554 989 ist ein Hubschrauber mit einem Hybridantrieb bekannt, der einen Turbinenmotor aufweist, der einen Generator antreibt, der elektrische Energie zur Versorgung einer ersten und einer zweiten elektrischen Maschine erzeugt. Die erste elektrische Maschine treibt direkt einen Hauptrotor des Hubschraubers an, und die zweite elektrische Maschine treibt dessen Heckrotor an. Der Turbinenmotor und der Generator sind in einem Chassis des Hubschraubers angeordnet.

Aus der US 2005/0045762 A2 ist ein Kipprotor-Flugzeug bekannt, dessen als Kipprotor ausgebildeter Hauptrotor an der Spitze einer verkippbaren und in Längsrichtung des Flugzeugs verfahrbaren Antriebsgondel angebracht ist. Ein herkömmlicher Flugzeugmotor treibt über ein Kegelrad-Untersetzungsgetriebe und ein weiteres Getriebe den Hauptrotor an, und über eine Welle und ein weiteres Getriebe einen Heckrotor. Der Flugzeugmotor ist innerhalb des Rumpfes des Flugzeugs angeordnet, aber es können auch zwei Flugzeugmotoren vorgesehen sein, die oben auf dem Rumpf symmetrisch zueinander an den beiden Seiten der Antriebsgondel angeordnet sind.

Aus der US 4 605 185 ist ein Starrflügel-Flugzeug mit einem Hybridantrieb bekannt, der eine Brennkraftmaschine aufweist, die über ein Getriebe einen Generator antreibt, der elektrische Energie zur Versorgung einer ersten und einer zweiten elektrischen Maschine erzeugt. Die erste elektrische Maschine treibt über ein Getriebe einen linken Propeller des Flugzeugs an, und die zweite elektrische Maschine treibt über ein Getriebe dessen rechten Propeller an. Weiterhin ist eine Notfallbatterie vorgesehen, die bei Ausfall der Brennkraftmaschine die beiden elektrischen Maschinen mit elektrischer Energie versorgt. Die Brennkraftmaschine, deren Getriebe, und der Generator sind im Rumpf des Flugzeugs angeordnet, und die beiden elektrischen Maschinen und deren Getriebe sind in den Flügeln des Flugzeugs angeordnet.

Aus der WO 03/106259 A1 ist ein Flugzeug bekannt, das einen Rumpf aufweist, einen mit dem Rumpf verbundenen Kippflügel, und einen Ausleger, der einen distalen Endabschnitt und einen proximalen Endabschnitt aufweist, der schwenkbar auf dem Rumpf gehaltert ist. Weiterhin ist ein Motor vorgesehen, und eine an den Motor angeschlossene Antriebsquelle zur Erzeugung eines Schubs am distalen Endabschnitt des Auslegers, um das Flugzeug zu bewegen. Der Ausleger kann frei um das proximale Ende verschwenkt werden, um einen Orientierungswinkel einzunehmen, der einen Ausgleich zwischen dem vom Motor erzeugten Schub und den auf das Flugzeug einwirkenden Kräften zu erzielen, nämlich der Schwerkraft, der Hubkraft, und dem Luftwiderstand. Die Antriebsquelle kann beispielsweise als ein Rotor ausgebildet sein, oder als zwei gegenläufige Rotoren.

### ZUSAMMENFASSUNG DER ERFINDUNG

Aufgabe der Erfindung ist die Bereitstellung eines verbesserten Hubschraubers mit Hybridantrieb.

Diese Aufgabe wird durch den Gegenstand des Patentanspruchs 1 gelöst. Weiterbildungen der Erfindung ergeben sich aus den Unteransprüchen.

Bei der Erfindung weist der Hybridantrieb eines Hubschraubers einen ersten Motor, einen zweiten Motor und einen Generator auf. Der erste Motor ist zum Antreiben der Generatoreinheit ausgeführt und der Generator ist zum Erzeugen elektrischer Energie zur Versorgung des zweiten Motors ausgeführt. Bei dem zweiten Motor handelt es sich um eine elektrische Maschine, die zum Antreiben eines Rotors des Hubschraubers ausgeführt ist. Bei dem anzutreibenden Rotor handelt es sich beispielsweise um den Hauptrotor des Hubschraubers oder um den Heckrotor.

Auf diese Weise ist es beispielsweise möglich, die Drehzahl des Hauptrotors (und/oder des Heckrotors) innerhalb eines großen Intervalls einzustellen. Aufgrund der sehr variablen Drehzahl des Rotors kann somit der Energieverbrauch optimiert werden. Hierdurch können das Leistungs- und Emissionsverhalten des Hubschraubers optimiert werden. Aufgrund des direkten Antriebs des Rotors können zusätzliche mechanische Elemente, wie Kupplung oder Taumelschreibe, vereinfacht ausgeführt werden oder gänzlich entfallen.

Bei einer Ausführungsform der Erfindung handelt es sich bei dem ersten Motor um einen Wankelmotor. Es kann sich aber auch um eine andere Verbrennungskraftmaschine (oder mehrere Verbrennungskraftmaschinen) handeln, beispielsweise um eine Turbine.

Bei einer weiteren Ausführungsform der Erfindung ist der zweite Motor ein trägheitsarmer Direktantrieb mit hoher Leistungsdichte. Auch kann ein weiterer solcher Elektromotor vorgesehen sein, um einen weiteren Rotor des Hubschraubers anzutreiben. Somit ist beispielsweise eine mechanische Entkoppelung von Heckrotorantrieb und Hauptrotorantrieb möglich.

Bei einer weiteren Ausführungsform der Erfindung weist der Hybridantrieb einen Energiespeicher zum Zwischenspeichern der von dem Generator erzeugten elektrischen Energie auf. Hierbei kann es sich um eine Anordnung von aufladbaren Batterien handeln. Auch können andere Energiespeicher vorgesehen sein.

Gemäß der Erfindung ist der zweite Motor zum direkten Antreiben des Rotors ausgeführt, so dass kein Rotorgetriebe erforderlich ist. Auf diese Weise können mechanische Elemente entfallen, wodurch Instandhaltungs- und Wartungsaufwand herabgesetzt sowie die Energieeffizienz gesteigert werden können.

Gemäß der Erfindung sind der erste Motor und der Generator zum platzsparenden Einbau, z.B. unter einem Kabinenboden des Hubschraubers ausgeführt. Auf diese Weise kann der Schwerpunkt des Hubschraubers nach unten verlagert und damit die Stabilität des Hubschraubers am Boden (z.B. bei Autorotationslandungen) erhöht werden. Auch die Sicherheit der Passagiere bei Crashlandungen wird durch das Fehlen großer Massen im Kabinendachbereich verbessert.

Bei einer weiteren Ausführungsform der Erfindung weist der Hybridantrieb weiterhin eine Lagerungsvorrichtung zum gelenkigen Befestigen des zweiten Motors an einer Hubschrauberzelle oder einer anderen tragenden Struktur des Hubschraubers auf, so dass der zweite Motor zusammen mit dem Hauptrotor des Hubschraubers relativ zu der Hubschrauberzelle verschwenkbar ist.

Bei einer weiteren Ausführungsform der Erfindung ist die Lagerungsvorrichtung als Kipplagerungsvorrichtung mit einem Kipplager und einem Kippaktuator ausgeführt. Dadurch ist es möglich, dass Motor und Rotor zusammen um eine Achse gekippt werden. Bei dieser Achse kann es sich beispielsweise um eine Achse handeln, die quer zur Längsachse des Hubschraubers steht, so dass Motor und Rotor nach vorne und nach hinten gekippt werden können.

Bei einer weiteren Ausführungsform der Erfindung weist der Hybridantrieb einen dritten Motor in Form einer elektrischen Maschine auf, die zum direkten Antreiben eines Heckrotors des Hubschraubers ausgeführt ist.

Weiterhin kann die Lagerungsvorrichtung auch als kardanische Lagerungsvorrichtung ausgeführt sein. Auf diese Weise ist es möglich, dass der Rotor in sämtliche Richtungen verkippt werden kann.

Auch kann vorgesehen sein, dass die Lagerungsvorrichtung zur Erregung einer spezifischen Schwingungsmode der elektrischen Maschine derart ausgeführt ist, dass eine gegenphasige Schwingung erzeugbar ist, durch welche eine ursprüngliche Schwingung auslöschbar ist. Auf diese Weise können ungewünschte Vibrationen kompensiert werden.

Bei der Erfindung kann der Hauptrotorantrieb eine aktive Klappensteuerung zur Minderung von Vibrationen des Hauptrotors aufweisen. Unter der aktiven Klappensteuerung ist hierbei die Einheit aus Steuerungselektronik und Steuerungselement (Klappe) zu verstehen. Entsprechend weisen die Rotorblätter des Hauptrotors Servoklappen auf, welche aktiv angesteuert werden können.

Bei einer weiteren Ausführungsform der Erfindung ist der Energiespeicher platzsparend, z.B. unter dem Kabinenboden des Hubschraubers angeordnet.

Bei der Erfindung kann vorgesehen sein, dass nicht nur der zweite Motor, sondern auch ein dritter Motor und eventuell weitere durch den Generator mit elektrischer Energie versorgt wird. Die Motoren treiben zusammen einen oder mehrere Rotoren an, beispielsweise einen Heckrotor oder einen zweiten Hauptrotor.

Bei der Erfindung kann vorgesehen sein, dass der zweite Motor, bei dem es sich um eine elektrische Hochdrehmomentmaschine handelt, zusammen mit dem Hauptrotor während des Fluges des Hubschraubers relativ zu der Hubschrauberzelle verschwenkt wird. In diesem Zusammenhang ist es wesentlich, dass der Hauptrotor und gegebenenfalls der Heckrotor von jeweils einer elektrischen Maschine direkt angetrieben wird. Auf diese Weise ist es prinzipiell möglich, dass die elektrische Maschine zusammen mit dem entsprechenden Rotor bewegt wird, beispielsweise durch Verkippen. Zur Energieversorgung der elektrischen Maschine ist eine Motor-Generatoreinheit vorgesehen, welche beispielsweise unterhalb des Hubschrauberzellenbodens angeordnet ist. Die Motor-Generatoreinheit weist einen oder mehrere Verbrennungsmotoren sowie einen oder mehrere daran angeschlossene Generatoren zur Erzeugung elektrischer Energie auf. Auch kann ein elektrischer Energiespeicher vorgesehen sein, welcher die von den Generatoren erzeugte elektrische Energie zwischenspeichert. Da der Antrieb der Rotoren durch eine oder mehrere elektrische Maschinen erfolgt, können die Drehzahlen der Rotoren in einem großen Drehzahlbereich variiert werden. Eine mechanische Kupplung ist nicht erforderlich.

Die Rotoren können also mit elektrischen Hochdrehmomentmaschinen angetrieben sein. Bei einer Ausführungsform der Erfindung handelt es sich bei diesen elektrischen Hochdrehmomentmaschinen um trägheitsarme Direktantriebe mit hoher Leistungsdichte. Ein Beispiel für einen solchen Direktantrieb ist in der DE 10 2007 013 732 A1 beschrieben.

Im Folgenden werden mit Verweis auf die Figuren Ausführungsbeispiele der Erfindung beschrieben.

### KURZE BESCHREIBUNG DER FIGUREN

- Fig. 1: zeigt einen Aufbau eines Hybridantriebs für einen Hubschrauber gemäß einem Ausführungsbeispiel der Erfindung.
- Fig. 2: zeigt einen Hybridhubschrauber gemäß einem Ausführungsbeispiel der Erfindung.
- Fig. 3: zeigt die Anordnung von Systemkomponenten gemäß einem Ausführungsbeispiel der Erfindung.
- Fig. 4: zeigt eine Systemarchitektur gemäß einem Ausführungsbeispiel der Erfindung.
- Fig. 5: zeigt eine Anordnung von Systemkomponenten gemäß einem Ausführungsbeispiel der Erfindung.
- Fig. 6: zeigt eine Lagerungsvorrichtung eines Hauptrotorantriebs gemäß einem Ausführungsbeispiel der Erfindung.
- Fig. 7: zeigt ein Flussdiagramm eines Verfahrens gemäß einem Ausführungsbeispiel der Erfindung.

### DETAILLIERTE BESCHREIBUNG VON AUSFÜHRUNGSBEISPIELEN

Die Darstellungen in den Figuren sind schematisch und nicht maßstäblich.

In der folgenden Figurenbeschreibung werden für die gleichen oder ähnlichen Elemente die gleichen Bezugsziffern verwendet.

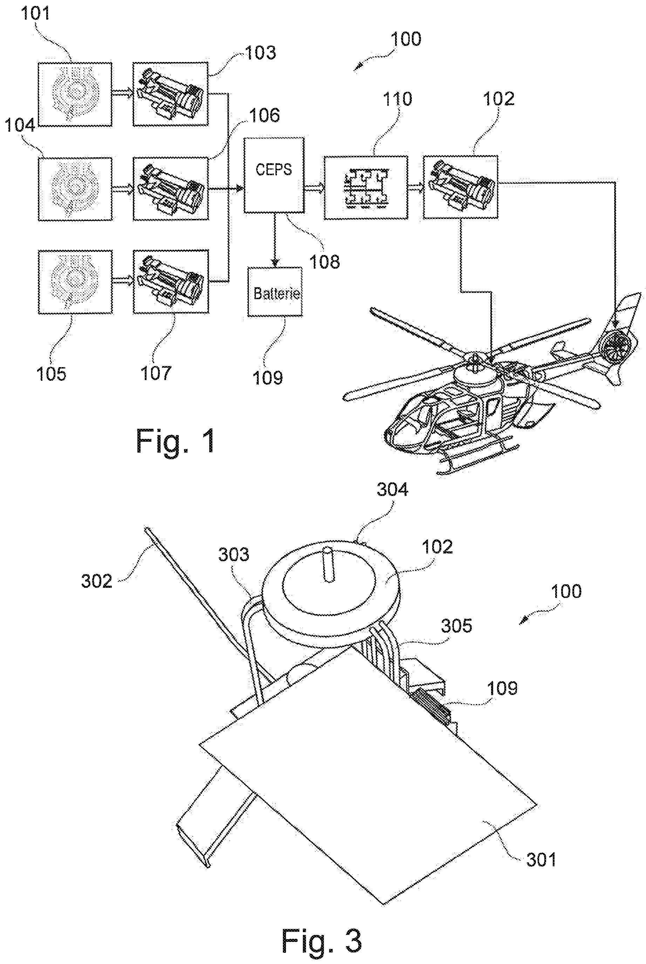

Fig. 1 zeigt einen Hybridantrieb für einen Hubschrauber gemäß einem Ausführungsbeispiel der Erfindung. Der Hybridantrieb 100 des Hubschraubers weist einen oder mehrere Verbrennungsmotoren (im Ausführungsbeispiel der Fig. 1 drei Verbrennungsmotoren 101, 104, 105) und einen oder mehrere elektrische Generatoren (im Ausführungsbeispiel der Fig. 1 drei Generatoren 103, 106, 107) auf. Jeder Verbrennungsmotor gibt mechanische Energie an den entsprechenden Generator ab, die dann in elektrische Energie umgewandelt wird. Diese elektrische Energie wird dann an ein zentrales Energiesteuerungssystem ("Central Electrical Power System", CEPS) 108 abgegeben, welches die Leistungssteuerung im Hubschrauber regelt. So kann die elektrische Energie an einen Inverter 110 abgegeben werden, der den bzw. die elektrischen Maschinen 102 mit der notwendigen elektrischen Energie versorgt.

Hierbei ist eine elektrische Maschine für den Hauptrotor vorgesehen und eine andere elektrische Maschine ist für den Heckrotor vorgesehen.

Weiterhin kann die von den Generatoren erzeugte elektrische Energie von der Energiesteuerung 108 an eine Energiespeichereinheit(elektrischen Speicher) 109, der beispielsweise in Form einer Batterieanordnung vorgesehen sein kann, abgegeben werden. Diese zwischengespeicherte elektrische Energie kann zur Notversorgung der elektrischen Maschinen 102 eingesetzt werden, falls eine oder mehrere der Verbrennungsmotoren (Verbrennungskraftmaschinen) 101, 104, 105 ausfallen sollten. Auch kann die zwischengespeicherte Energie dazu verwendet werden, Spitzen in der benötigen Leistung der elektrischen Maschinen zu bedienen. Da es treibstoffsparend sein kann, bei Flugabschnitten geringer Leistungsanforderung eine oder mehrere Verbrennungskraftmaschinen vorübergehend abzuschalten, kann die gespeicherte elektrische Energie auch den Hochlaufzeitraum eines wieder eingeschalteten Verbrennungsmotors überbrücken.

So ist es möglich, dass die Verbrennungsmotoren 101, 104 und 105 immer im optimalen Arbeitspunkt arbeiten, so dass der Energieverbrauch optimiert ist.

Es wird also einer oder eine Mehrzahl von Verbrennungsmotoren, bei denen es sich beispielsweise um kompakte Wankelmotoren handelt, mit Generatoren verwendet, welche elektrische Leistung erzeugen und diese an die mit elektrischen Maschinen ausgestatteten Haupt- und Heckrotoren abgeben. Die elektrische Energie kann bedarfsweise mit einer Batterie zwischengespeichert werden.

Durch diese Anordnung werden Haupt- und Heckrotorgetriebe konventioneller Bauart ersetzt. Diese Getriebe konventioneller Bauart erlauben aus Leistungs- und Festigkeitsgründen oft nur eine stark eingeschränkte Drehzahlvariation. Durch den Einsatz von elektrischen Maschinen ist eine größere Variationsbreite der Drehzahl möglich. Dies kann zu einer Leistungsbedarfsminderung, einer Reduktion von Lärm- und Kompressibilitätseffekten sowie einer Ausweitung der Flugbereichshüllkurve (Flugbereichsenvelope) in Richtung auf höhere Fluggeschwindigkeit und Lastvielfache führen.

Hierzu können die Drehzahlen der Rotoren unabhängig von den Verbrennungsmotoren variabel gesteuert werden. Dies kann bis zum Stillsetzen des Heckrotors im Vorwärtsflug ausgeweitet werden. Hierdurch kann eine deutliche Widerstandsabminderung erzielt werden. Die Giersteuerung erfolgt in einem solchen Falle über eine steuerbare Seitenleitwerksflosse.

Das Antriebssystem hat entsprechend der Zahl unabhängiger Energiequellen eine hohe Verfügbarkeit und Ausfallsicherheit. Hierzu werden die einzelnen Komponenten so gewählt, dass sie ausgefallene Nachbareinheiten vorübergehend ersetzen können.

Mit dem mechanischen Getriebe fallen darüber hinaus eine Reihe weiterer Problembereiche weg, wie z. B.
- Undichtigkeiten und Fremdkörper im Ölsystem,
- Zahnradversagen und Lagerprobleme,
- Verschleiß und aufwändige Wartungsarbeiten,
- hoher Aufwand beim Ziehen des Masts,
- Kupplungsprobleme zwischen Antrieb und Getriebeeingang sowie bei zweimotorigen Versionen Kompensationsanforderungen bei unterschiedlichem Leistungsniveau der Triebwerke (sog. Power Split),
- Komfortminderung durch störenden Lärm, insbesondere besonders durch tonale Lärmanteile, da das Getriebe eine der dominierenden Kabinen-Lärmquellen darstellt,
- Bedrohung der Passagiere im Falle eines Unfalls durch über der Kabine angeordnete große Massen, sowie
- Begrenzung der Änderung des Drehmomentenniveaus, wie sie bei der üblichen Weiterentwicklung eines Hubschraubertyps in Richtung auf höheres Abfluggewicht (Upgrading) erforderlich wird und hierdurch:
- Hemmung der Entwicklung einer Hubschraubertypenfamilie.

Durch die Trennung von Energieerzeugung und Antrieb ergibt sich eine deutlich höhere Flexibilität in der Architektur des Gesamtsystems. Während konventionelle Triebwerke möglichst nah an dem Getriebe angeordnet werden, ist hier nur die Lage des Elektromotors festgelegt. Die energieerzeugenden Antriebskomponenten können z.B. unter dem Kabinenboden integriert werden, was die Zugänglichkeit erleichtern kann und den Hubschrauber stabiler auf dem Boden stehen lässt. Durch eine geeignete Verschiebung der Energieeinheit (oder beispielsweise nur des Energiespeichers) in Längs- und Querrichtung kann die Lage des möglichen Schwerpunktbereichs günstig gewählt werden.

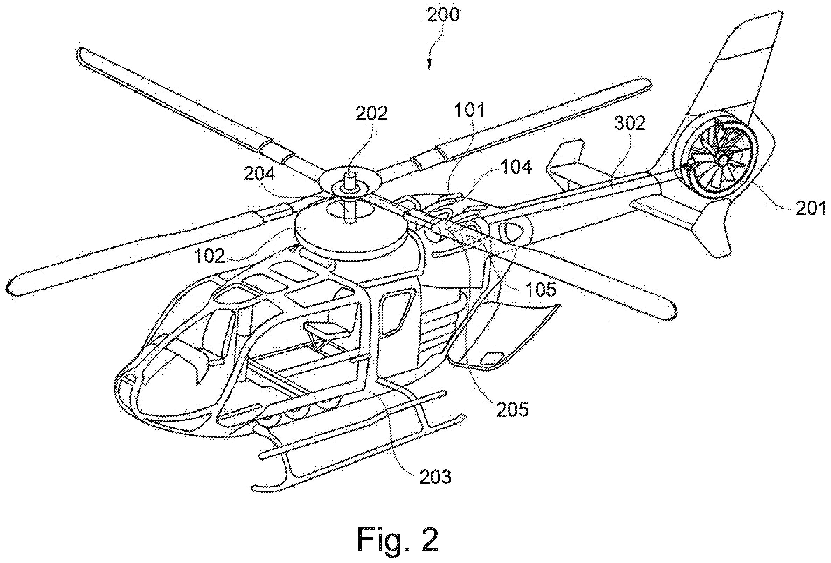

Fig. 2 zeigt einen Hubschrauber mit einem elektrischen Hauptrotorantrieb 102 und einem elektrischen Heckrotorantrieb 201.

Der elektrische Hauptrotorantrieb 102 ist über die Antriebsachse 204 direkt mit dem Hauptrotor 202 verbunden. Die Leistung des elektrischen Hauptrotorantriebs beträgt beispielsweise 600 kW und ist multi-redundant ausgeführt, beispielsweise in Form einer Transversalflussmaschine (sog. "Trans-Flux-Maschine").

Der Hauptrotorantrieb 102 ist beispielsweise über ein Kipplager an der tragenden Struktur 203 der Hubschrauberzelle befestigt.

Der Heckrotorantrieb 201 weist ebenfalls eine elektrische Maschine mit einer Leistung von etwa 200 kW auf, die ebenfalls multi-redundant ausgeführt ist, beispielsweise ebenfalls in Form einer Transversalflussmaschine.

Unterhalb des Kabinenbodens oder (wie in Fig. 2) oberhalb der Hubschrauberzelle sind mehrere Motor-Generator-Einheiten (im Bild vier an der Zahl) mit einem jeweiligen Verbrennungsmotor 101, 104, 105 bzw. einem Generator 205 angeordnet, die über elektrische Verbindungen mit den elektrischen Maschinen verbunden sind. Eine dieser elektrischen Verbindungen zwischen dem Heckrotorantrieb 201 und den Generatoren ist durch das Bezugszeichen 302 symbolisiert.

Die kontinuierliche Leistung einer jeden Motor-Generatoreinheit beträgt beispielsweise 133 kW, mit einer Spitzenleistung von 166 kW.

Als Energiespeicher können neben wiederaufladbaren Batterien auch Kondensatoren oder Buffer Caps eingesetzt werden, welche beispielsweise 40 kW-Stunden speichern können. Je nach Motorisierung kann hierdurch eine Notstromversorgung von mehreren Minuten bereitgestellt werden.

Fig. 3 zeigt eine mögliche Anordnung von Systemkomponenten gemäß einem Ausführungsbeispiel der Erfindung. Der elektrische Antrieb 102 des Hauptrotors ist direkt unterhalb des Hauptrotors angeordnet und über die elektrischen Leitungspaare 303, 304, 305 mit der Motor-Generatoreinheit unterhalb des Kabinenbodens 301 verbunden. Die Motor-Generatoreinheit unterhalb des Kabinenbodens 301 ist darüber hinaus über die Leitung 302 mit dem Heckrotorantrieb verbunden.

Die Verbindung zwischen der Energieerzeugung und den Elektromotoren erfolgt also über Kabel, welche sich platzsparend entlang der Kabinenwand verlegen lassen.

Die Motor-Generatoreinheit weist beispielsweise vier Turbo-Wankel-Zweischeibenmotoren (Turbo Wankel 2disk Motoren) mit 356 ccm Hubraum und einer kontinuierlichen Leistung von 133 kW sowie einer Spitzenleistung von 166 kW (für etwa eine Stunde) auf. Das Gesamtgewicht beträgt 40 kg.

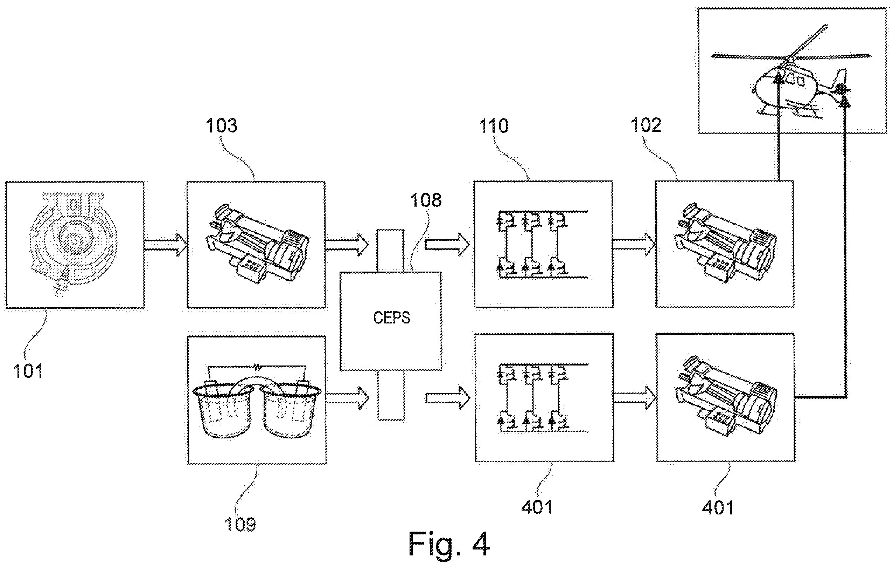

Die elektrische Steuereinheit 108 (siehe Fig. 4) kann die Verbrennungsmotoren steuern und den Kraftstoffverbrauch und die Kraftstoffverbrennung einregeln und optimieren. Die Elektroantriebe von Haupt- und Heckrotor können multi-redundant ausgeführt sein, beispielsweise indem eine Vielzahl von Statoren und Rotoren innerhalb der elektrischen Maschinen vorgesehen sind.

Beispielsweise sind drei Batterien vorgesehen, welche insgesamt 40 kW-Stunden speichern können und z. B. Sion Powerzellen verwenden. Das Gewicht der Energiespeicher kann insgesamt beispielsweise 100 kg betragen.

Fig. 4 zeigt eine grundlegende Systemarchitektur eines Hybridhelikopters gemäß einem Ausführungsbeispiel der Erfindung. Beispielsweise wird ein einzelner Verbrennungsmotor 101 verwendet. Der Verbrennungsmotor 101 ist mit einem elektrischen Generator 103 verbunden, der hinwiederum erzeugte Energie einer zentralen elektrischen Energiesteuerung (elektrische Steuereinheit) 108 zuführt. An dieser Energiesteuerung 108 sind auch Speicherzellen als Energiespeichereinheit 109 angeschlossen, welche entsprechend geladen und entladen werden können. Weiterhin sind an die Steuerung 108 zwei Inverter 110, 401 angeschlossen, welche jeweils mit einer elektrischen Maschine 102, 402 für den Hauptrotor, respektive den Heckrotorantrieb angeschlossen sind.

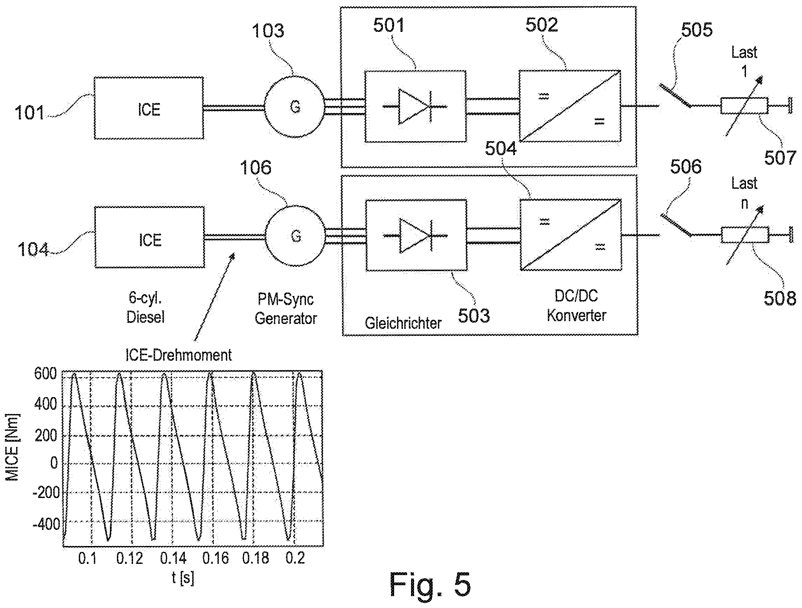

Fig. 5 zeigt eine Anordnung der einzelnen Systemkomponenten gemäß einem Ausführungsbeispiel der Erfindung. Im Fall der Fig. 5 sind zwei Verbrennungsmotoren 101, 104 vorgesehen, bei denen es sich beispielsweise um 6-Zylinder-Dieselmotoren handelt. Die beiden Motoren 101, 104 sind mit entsprechenden Generatoren 103, 106 verbunden, deren Energieausgang jeweils mit einem Gleichrichter 501, 503 verbunden ist. Am Ausgang der Gleichrichter befinden sich DC/DC-Konverter 502, 504. An die Konverterausgänge können über die Schalter 505, 506 entsprechende Lasten 507, 508 (beispielsweise die elektrischen Maschinen) angeschlossen werden.

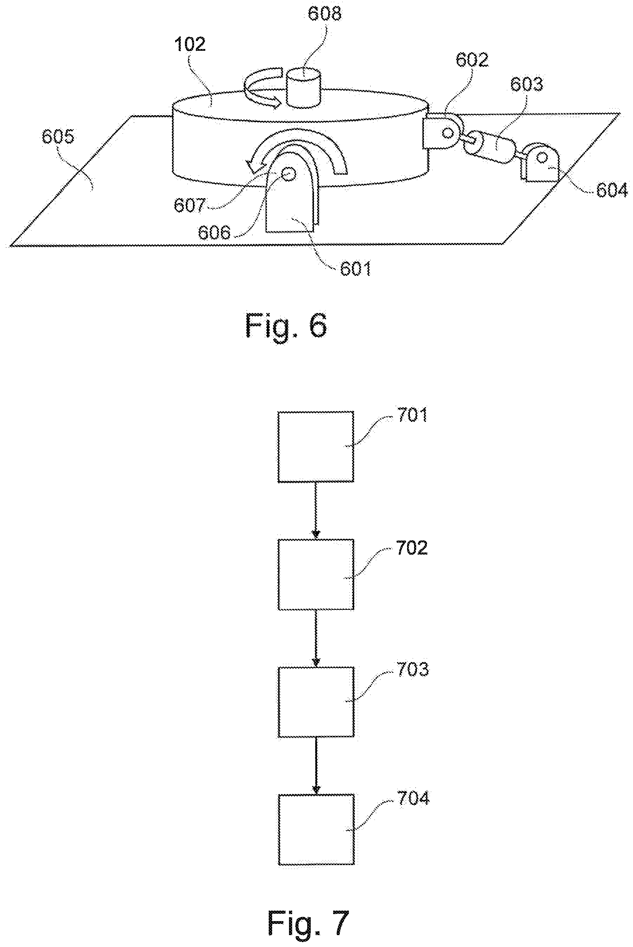

Fig. 6 zeigt die Anordnung einer elektrischen Maschine gelenkig auf dem Kabinendach 605 des Hubschraubers. Der Wegfall der starren Anbindung des Rotorantriebs an die Hubschrauberzelle erlaubt es, den Rotormast samt der elektrischen Maschine und damit den Schubvektor nach Bedarf in Längsrichtung des Hubschraubers (also um die Querachse) zu schwenken. Hierdurch können beim Vorwärtsflug die normalerweise erforderliche große, widerstandserhöhende Anstellung des Rumpfes sowie die damit verbundenen hohen Blattwurzel-Biegemomente vermieden werden.

An dem Kabinendach 605 (Teil der Hubschrauberzelle) ist ein Kipplager 601, das beispielsweise aus einer Querachse 606 und zwei seitlichen Aufhängungen 607 besteht, angebracht.

Die elektrische Maschine 102 ist an der Querachse 606 aufgehängt und kann um diese Querachse verkippt werden. Der Rotormast 608 wird durch die elektrische Maschine 102 in Rotation versetzt und wird ebenfalls zusammen mit der elektrischen Maschine 102 um die Achse 606 verkippt.

Um das Verkippen zu steuern, ist zumindest ein Kippaktuator 603 vorgesehen, welcher über die Aufhängung 604 ebenfalls mit dem Kabinendach 605 und über die Aufhängung 602 mit dem Gehäuse der elektrischen Maschine verbunden ist.

Der Kippwinkel bewegt sich beispielsweise zwischen 0 Grad und etwa 15 Grad nach vorne und/oder hinten. Er kann nach Bedarf auch vergrößert werden. Auch ist es möglich, eine kardanische Aufhängung der Rotor-/Antriebseinheit vorzusehen, so dass die elektrische Maschine zusammen mit dem Hauptrotor in alle Richtungen verkippt werden kann.

Die widerstandsärmste Einstellung des Hubschrauberrumpfes kann durch ein Ruder am Höhenleitwerk eingestellt werden. Durch das Nachvornekippen des Rotors können die dadurch auftretenden Mastmomente verkleinert werden.

Fig. 7 zeigt ein Flussdiagramm eines Verfahrens gemäß einem Ausführungsbeispiel der Erfindung. Zunächst wird in Schritt 701 ein bestimmter Flugzustand durch den Piloten mittels Steuerhebel kommandiert. In Schritt 702 wird von einem Bordcomputer die entsprechende Rotor-Leistungsanforderung, die optimalen Werte für Neigung des Rotormastes und Rotordrehzahl sowie die zugehörige Verbrennungsleistung ermitteln. In Schritt 703 wird die erforderliche mechanische Energie durch das Betreiben eines Verbrennungsmotors erzeugt. Diese mechanische Energie wird dann in Schritt 704 von einem Generator in elektrische Energie umgewandelt. In Schritt 705 wird diese elektrische Energie (ggf. nach Nachbearbeitung, beispielsweise Gleichrichtung und/oder Transformation) zum Antreiben einer oder mehrerer elektrischer Maschinen für den Hauptrotor und/oder den Heckrotor verwendet. In Schritt 706 wird die elektrische Maschine des Hauptrotors zusammen mit dem Hauptrotor bei optimierter Drehzahl während des Vorwärtsfluges des Hubschraubers verschwenkt, um den Rumpfwiderstand zu minimieren.

### BEZUGSZEICHENLISTE

- 100: Hybridantrieb
- 101: Verbrennungsmotor
- 102: Elektrische Maschine
- 103: Generator
- 104: Verbrennungsmotor
- 105: Verbrennungsmotor
- 106: Generator
- 107: Generator
- 108: Zentrales Energiesteuerungssystem
- 109: Energiespeichereinheit
- 110: Inverter
- 200: Hubschrauber
- 201: Heckrotorantrieb
- 202: Hauptrotor
- 203: Hubschrauberzelle
- 204: Antriebsachse
- 205: Generator
- 301: Kabinenboden
- 302: Leitung
- 303: Leitungspaar
- 304: Leitungspaar
- 305: Leitungspaar
- 401: Inverter
- 402: Motor
- 501: Gleichrichter
- 502: Konverter
- 503: Gleichrichter
- 504: Konverter
- 505: Schalter
- 506: Schalter
- 507: Last
- 508: Last
- 601: Kipplager
- 602: Aufhängung
- 603: Kippaktuator
- 604: Aufhängung
- 605: Kabinendach
- 606: Querachse
- 607: Aufhängungen
- 701: Verfahrensschritt
- 702: Verfahrensschritt
- 703: Verfahrensschritt
- 704: Verfahrensschritt
- 705: Verfahrensschritt
- 706: Verfahrensschritt

## Patentansprüche

1. Hubschrauber mit einem Hybridantrieb, der Hybridantrieb aufweisend:
einen ersten Motor (101);
einen zweiten Motor (102); und
einen Generator (103);
wobei der erste Motor (101) zum Antreiben des Generators (103) ausgeführt ist;
der Generator (103) zum Erzeugen elektrischer Energie zur Versorgung des zweiten Motors (102) ausgeführt ist; und
der zweite Motor (102) eine elektrische Maschine ist, die zum direkten Antreiben eines Rotors des Hubschraubers (200) ausgeführt ist, so dass kein Rotorgetriebe erforderlich ist;
wobei der Hubschrauber eine Kabine aufweist; **dadurch gekennzeichnet, dass**
der erste Motor (101) und der Generator (103) unter der Kabine angeordnet sind, z.B. unter einem Kabinenboden (301) des Hubschraubers.

2. Hubschrauber nach Anspruch 1,
wobei der erste Motor (101) ein Wankelmotor oder ein anderer Verbrennungsmotor ist.

3. Hubschrauber nach einem der vorhergehenden Ansprüche,
wobei der zweite Motor (102) ein trägheitsarmer Direktantrieb mit hoher Leistungsdichte ist.

4. Hubschrauber nach einem der vorhergehenden Ansprüche, weiterhin aufweisend:
einen Energiespeicher zum Zwischenspeichern der von der Generatoreinheit (103) erzeugten elektrischen Energie.

5. Hubschrauber nach Anspruch 4,
wobei der Energiespeicher unter der Kabine, z.B. unter dem Kabinenboden (301) des Hubschraubers angeordnet ist.

6. Hubschrauber nach einem der vorhergehenden Ansprüche, weiterhin aufweisend:
eine Lagerungsvorrichtung (601, 602, 603, 604) zum gelenkigen Befestigen des zweiten Motors (102) an einer Hubschrauberzelle (605), so dass der zweite Motor (102) zusammen mit einem Hauptrotor des Hubschraubers relativ zu der Hubschauberzelle verschwenkbar ist.

7. Hubschrauber nach Anspruch 6,
wobei die Lagerungsvorrichtung (601, 602, 603, 604) als Kipplagerungsvorrichtung mit einem Kipplager (601) und einem Kippaktuator (603) ausgeführt ist.

8. Hubschrauber nach einem der vorhergehenden Ansprüche, weiterhin aufweisend:
einen dritten Motor (402) in Form einer elektrischen Maschine, die zum direkten Antreiben eines Heckrotors des Hubschraubers (200) ausgeführt ist.

## Claims

1. Helicopter having a hybrid drive, the hybrid drive comprising:
a first engine (101);
a second engine (102); and
a generator (103);
the first engine (101) being configured to drive the generator (103);
the generator (103) being configured to generate electrical energy to power the second engine (102); and
the second engine (102) being an electric machine which is configured to drive a rotor of the helicopter (200) directly in such a way that no rotor transmission is required;
the helicopter comprising a cabin;
**characterised in that**
the first engine (101) and the generator (103) are arranged under the cabin, for example under a cabin floor (301) of the helicopter.

2. Helicopter according to claim 1,
wherein the first engine (101) is a Wankel rotary engine or other internal combustion engine.

3. Helicopter according to either of the preceding claims,
wherein the second engine (102) is a low-inertia direct drive having a high power density.

4. Helicopter according to any of the preceding claims, further comprising:
an energy store for buffering the electrical energy generated by the generator unit (103).

5. Helicopter according to claim 4,
wherein the energy store is arranged under the cabin, for example under the cabin floor (301) of the helicopter.

6. Helicopter according to any of the preceding claims, further comprising:
a bearing device (601, 602, 603, 604) for fixing the second engine (102) to a helicopter cell (605) in an articulated manner, in such a way that the second engine (102) is pivotable together with a main rotor of the helicopter relative to the helicopter cell.

7. Helicopter according to claim 6,
wherein the bearing device (601, 602, 603, 604) is configured as a tilting bearing device comprising a tilting bearing (601) and a tilting actuator (603).

8. Helicopter according to any of the preceding claims, further comprising:
a third engine (402) in the form of an electric machine, which is configured to drive a tail rotor of the helicopter (200) directly.

## Revendications

1. Hélicoptère comportant un entraînement hybride, l'entraînement hybride présentant :
- un premier moteur (101) ;
- un deuxième moteur (102) ; et
- un générateur (103) ;
dans lequel
- le premier moteur (101) est conçu pour entraîner le générateur (103) ;
- le générateur (103) est conçu pour produire de l'énergie électrique afin d'alimenter le deuxième moteur (102) ; et
- le deuxième moteur (102) est un moteur électrique qui est conçu pour entraîner directement un rotor de l'hélicoptère (200), de telle sorte qu'aucune transmission rotor n'est nécessaire ;
dans lequel l'hélicoptère présente une cabine ; **caractérisé en ce que**
le premier moteur (101) et le générateur (103) sont disposés sous la cabine, par exemple sous un plancher de cabine (301) de l'hélicoptère.

2. Hélicoptère selon la revendication 1,
dans lequel le premier moteur (101) est un moteur à piston rotatif ou un autre moteur à combustion interne.

3. Hélicoptère selon une des revendications précédentes, dans lequel le deuxième moteur (102) est un entraînement direct à faible inertie avec une densité de puissance élevée.

4. Hélicoptère selon une des revendications précédentes, présentant en outre :
un accumulateur d'énergie pour stocker de manière intermédiaire l'énergie électrique produite par l'unité générateur (103).

5. Hélicoptère selon la revendication 4,
dans lequel l'accumulateur d'énergie est disposé sous la cabine, par exemple sous le plancher de cabine (301) de l'hélicoptère.

6. Hélicoptère selon une des revendications précédentes, présentant en outre :
un moyen de stockage (601, 602, 603, 604) pour fixer de manière articulée le deuxième moteur (102) à une cellule d'hélicoptère (605), de telle sorte que le deuxième moteur (102) peut pivoter conjointement avec un rotor principal de l'hélicoptère par rapport à la cellule d'hélicoptère.

7. Hélicoptère selon la revendication 6,
dans lequel le moyen de stockage (601, 602, 603, 604) est conçu sous la forme d'un moyen de stockage basculant comportant un palier à bascule (601) et un actionneur à bascule (603).

8. Hélicoptère selon une des revendications précédentes, présentant en outre :
un troisième moteur (402) sous la forme d'une machine électrique qui est conçue pour entraîner directement un rotor de queue de l'hélicoptère (200).
